**Europäisches Patentamt**

**European Patent Office**

**Office européen des brevets**

(19)

(11) **EP 1 134 873 A2**

(12) **EUROPÄISCHE PATENTANMELDUNG**

(43) Veröffentlichungstag:
**19.09.2001 Patentblatt 2001/38**

(51) Int Cl.⁷: **H02K 3/42**, H02K 1/16

(21) Anmeldenummer: **01106022.5**

(22) Anmeldetag: **12.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.03.2000 DE 10013375**

(71) Anmelder: **ALSTOM Power N.V.**
**1101 CS Amsterdam (NL)**

(72) Erfinder:
• **Leyvraz, Rene-Louis**
**5242 Birr (CH)**
• **Stallone, Francesco**
**6600 Locarno (CH)**

(74) Vertreter: **Liebe, Rainer et al**
**ALSTOM (Schweiz) AG**
**Intellectual Property CHSP**
**Haselstrasse 16/699, 5. Stock**
**5401 Baden (CH)**

(54) **Elektrische Maschine**

(57) Bei einem Generator mit indirekt gasgekühlter, insbesondere luftgekühlter, Statorwicklung (21) sind die Endbereiche der Statorbohrung (23) so auszuführen, dass die Leiterstäbe möglichst gut vom Stator-Blechkörper (20) gegen Wirbelströme induzierende Magnetfelder abgeschirmt werden, andererseits aber auch ein bestimmtes radiales Mass zwischen der Rotorkappe (12) und dem Stator-Blechkörper (20) gewährleistet ist. Erfindungsgemäss wird der Endbereich der Statorbohrung hierzu mit vier axialen Zonen mit unterschiedlichem Durchmesserverlauf ausgeführt. Eine erste Zone

(I) ist das Innere des Stators, mit dem konstanten Statorbohrungs-Nenndurchmesser $(D_I)$. Zur Stirnseite des Stators hin ist eine zweite Zone (II) mit sich zur Stirnseite hin erweiterndem Statorbohrungsdurchmesser $(D_{II})$ angordnet. Dort erweitert sich die Statorbohrung auf den Durchmesser einer dritten Zone (III) mit wenigstens näherungsweise konstantem Durchmesser $(D_{III})$, wobei dieser Durchmesser einerseits gross genug ist, um einen erforderlichen Abstand zur Rotorkappe zu gewährleisten, aber weiterhin eine gute Überdeckung der Stator-Leiterstäbe durch den Blechkörper gewährleistet.

**Fig. 2**

## Beschreibung

### Technisches Gebiet

Die vorliegende Erfindung betrifft das technische Gebiet der elektrischen Maschinen. Sie betrifft insbesondere die Gestaltung einer Statorbohrung in axialen Endpartien eines Stators, im Bereich von Rotorkappen.

### Stand der Technik

Bei elektrischen Maschinen wie Generatoren oder Elektromotoren stellt das Luftspaltmass zwischen einem Aktivteil des Rotors und einem Blechkörper des Stators einen wichtigen Parameter zur Einstellung der Maschinenkennlinien dar. Andererseits beeinflusst dieses Mass auch die mechanische Handhabbarkeit der oft viele Tonnen schweren Rotoren. So liegt auf der Hand, dass zum Ein- und Ausfahren des Rotors beispielsweise eines Generators für eine Leistung von einigen 100 MVA in den Stator und aus dem Stator ein radiales Mindestmass des Luftspaltes erforderlich ist. Einen kritischen Bereich stellen hierbei die axialen Stirnseiten einer solchen Maschine dar.

Üblicherweise werden die Rotoren an ihren Enden mit Rotorkappen versehen. Aufgabe der Rotorkappe ist unter anderem die Fixierung der axialen Endbereiche von Rotorwicklungen. Der Aussendurchmesser der Rotorkappen ist grösser als der Aussendurchmesser des Mittelteils des Rotors, des sogenannten Rotorballens. Auch an diesen Stellen muss das Mindestmass des Luftspaltes gewährleistet werden, ohne das Luftspaltmass im Inneren des Stators, mithin im Aktivbereich der Maschine, zu vergrössern. Daher muss in den axialen Endbereichen zu den Stirnseiten des Stators hin der Durchmesser der Statorbphrung so vergrössert werden, dass im Bereich der Rotorkappe aus Verlustgründen ein minimal erforderliches radiales Mass zur Kappe gewährleistet ist. Dieses Mindestmass muss auch eingehalten werden, um beim Rotorziehen das Anheben des Rotors zu ermöglichen. Dabei ist es äusserst ungünstig, im fraglichen Bereich den Innendurchmesser der Statorbohrung sprungartig anzuheben, da dieser sich im noch Aktivteil des Rotors befindet. Starke Stufungen des Bohrungsdurchmessers der Statorbleche in diesem Bereich würden dazu führen, dass die Statorbleche mit axialen Magnetfeldern und daraus resultierenden Wirbelströmen beaufschlagt würden.

Aus der SU 1185498 ist beispielsweise bekannt, den axialen Auslauf der Statorbohrung so zu gestalten, dass die Magnetfeldlinien möglichst sauber abschliessen. Hierzu ist die Statorbohrung zur Stirnseite hin mit einem zunehmenden Gradienten vergrössert, wodurch als Nebeneffekt auch ein hinreichendes Luftspaltmass im Bereich der Rotorkappe gewährleistet ist.

Es ist weiterhin aus der ABB Technik 1/96, S. 20 ff für luftgekühlte Generatoren bekannt, die Statorbleche zur Stirnseite des Stators hin mit einem mehr oder weniger linear zunehmenden Innenbohrungsdurchmesser auszuführen. Daraus resultiert eine konische Erweiterung der Statorbohrung, die es bei entsprechender geometrischer Auslegung der Konizität ermöglicht, das Mindestmass für den Luftspalt aufrechtzuerhalten. Die konische Erweiterung der Statorbohrung bringt gegenüber einer sprungartigen Vergrösserung den Vorteil, dass nur ein kleiner Bereich jedes Statorbleches mit axialen Magnetfeldern beaufschlagt wird, wodurch die Belastung jedes einzelnen Statorbleches durch induzierte Wirbelströme gering bleibt. Es wird weiterhin angegeben, bei luftgekühlten Generatoren eine massive Aluminiumpressplatte in Wirkverbindung mit nichtmagnetischen Pressfingern anstelle der von wassergekühlten Generatoren grösserer Einheitenleistung her bekannten laminierten Pressplatte einzusetzen. Hier ist ein Vorteil darin zu sehen, dass die massive Aluminiumpressplatte eine gute Abschirmung der Statorbleche gegen axiale Magnetfelder in den Endbereichen des Stators gewährleistet, und Wirbelstromverluste zu vermindern hilft. Nachteilig an der zitierten Ausführung der sogenannten Endabtreppung der Statorbohrung ist einerseits aus fertigungstechnischer Hinsicht, dass viele Statorbleche mit unterschiedlichem Bohrungsdurchmesser benötigt werden. Weiterhin wird mit dem zunehmenden Durchmesser der Statorbohrung die Überdeckung der Leiterstäbe des Stators verringert. Die Leiterstäbe jedoch sind wiederum nicht für diese Orientierung der magnetischen Feldlinien vorgesehen, und es werden in den Leiterstäben Wirbelströme induziert, die lokal eine starke thermische Belastung verursachen. Speziell bei luftgekühlten Generatoren und weiter gesteigerten Leistungsdichten können diese Wirbelstromverluste in den Leiterstäben zu einer unerwünschten oder gar unzulässigen lokalen Erwärmung und zu negativen Einflüssen auf die erzielbaren Wirkungsgrade führen.

### Darstellung der Erfindung

Hier will die Erfindung Abhilfe schaffen. Ziel der Erfindung, wie sie in den Ansprüchen gekennzeichnet ist, ist, durch eine neue Geometrie des Endbereichs der Statorbohrung eine Verbesserung des magnetischen Flusses zur Verringerung von Wirbelströmen und damit eine geringere lokale Erwärmung zu schaffen. Die Erfindung ist ganz besonders vorteilhaft für die Anwendung unter den speziellen Gegebenheiten der oben zitierten luftgekühlten Generatoren geeignet.

Erfindungsgemäss wird bei einer elektrischen Maschine der eingangs genannten Art der Endbereich des Stators respektive der Statorbohrung im axialen Verlauf in Zonen mit unterschiedlichem Verlauf des Innendurchmessers der Statorbohrung ausgeführt. Dabei weist eine erste Zone der Statorbohrung eine konstante Lichte Weite auf. Für einen gegebenen Rotor ist diese lichte Weite durch ein radiales Luftspaltmass zwischen dem Rotorballen und dem Stator-Blechkörper vorgegeben. Dieses Mass liegt insbesondere bei den zitierten luftgekühlten Generatoren, die in einem Leistungsbereich bis beispielsweise 500 MVA angesiedelt sind, in der Grössenordnung eines mechanisch erforderlichen Masses, das für die Handhabung des Rotors innerhalb der Statorbohrung, beispielsweise beim Ein- und Ausfahren des Rotors, gewährleistet sein muss. Dabei muss dieses Mindestmass auch im Bereich der Rotorkappen, welche einen grösseren Durchmesser als der Rotorballen aufweisen, gewährleistet sein. Nach dem Stand der Technik wird daher die Statorbohrung mit einer kontinuierlichen Endabtreppung wie oben zitiert ausgeführt, mit den dort ebenfalls erwähnten Problemen der durch radiale Magnetfelder in den Leiterstäben induzierten Verluste.

Ein zu kleiner radialer Abstand zwischen der Rotorkappe und dem Stator-Blechkörper verursacht neben Problemen mit der mechanischen Handhabbarkeit auch eine Zunahme der in der Rotorkappe induzierten Nutoberwellen.

Die Erfindung will die Gestaltung der Statorbohrungs-Endbereiche so angeben, dass einerseits Minimierung der Wirbelstromverluste in den Stator-Leiterstäben erreicht wird, dabei gleichzeitig aber auch vorteilhaft mit Blick auf die weiteren Aspekte ist.

Erfindungsgemäss ist axial ausserhalb der ersten Zone eine zweite Zone mit sich zur Stirnseite des Stators hin erweiterndem Bohrungsdurchmesser angeordnet. Im axialen Bereich der Rotorkappe schliesst sich eine dritte Zone an, die wiederum einen weitgehend konstanten Bohrungsdurchmesser aufweist, welcher aber grösser ist als der Bohrungsdurchmesser in der ersten Zone. Der Bohrungsdurchmesser in der dritten Zone ist so bemessen, dass die Leiterstäbe der Statorwicklung wenigstens dort, wo Leitermaterial angeordnet ist, wenigstens zum grössten Teil in Umfangsrichtung von Statorzähnen überdeckt ist. Der Durchmesser der Statorbohrung in der dritten Zone ist so bemessen, dass er an keiner Stelle der dritten Zone wesentlich grösser ist, als ein wirksamer Stator-Wicklungsdurchmesser, der durch eine radial innere Begrenzung des Leitermaterials der Statorwicklung definiert ist. Hierdurch sind die Leiterstäbe der Statorwicklung in der dritten Zone weitgehend von radialen Magnetfeldern, welche in der Statorwicklung zu Verlusten führen, abgeschirmt.

Eine bevorzugte Variante der Erfindung ist, den Durchmesser der Statorbohrung in der dritten Zone so auszuführen, dass das radiale Mass zwischen der Rotorkappe und dem Stator in der dritten Zone das Luftspaltmass in der ersten Zone des Stators nicht wesentlich überschreitet. Dies gewährleistet einerseits die maximale Überdeckung der Leiterstäbe; andererseits ist die mechanische Handhabbarkeit des Rotors durch das minimal vorhandene radiale Spaltmass eingeschränkt, weshalb eine Vergrösserung des radialen Spaltmasses in der dritten Zone über das Luftspaltmass in der ersten Zone keinen Nutzen bringt. Wenn das radiale Luftspaltmass in der ersten Zone bereits, wie oben dargelegt, nahe an dem aus Handhabungsgründen minimal erforderlichen Wert liegt, wird der Durchmesser der Statorbohrung in der dritten Zone bevorzugt so zu bemessen sein, dass er den Bohrungsdurchmesser in der ersten Zone um das selbe Mass überschreitet, wie der Durchmesser der Rotorkappen den Durchmesser des Rotorballens überschreitet.

Ein weiteres Auslegungskriterium für die Durchmesser der verschiedenen Zonen der Statorbohrung stellt eine Leiter-Freilegungszahl $Q_D$ dar, welche definiert ist als

$$Q_D = \frac{D_{III} - D_I}{D_{eff} - D_I}$$

Hierbei bedeuten $D_{III}$ den Durchmesser der Statorbohrung an einer axialen Position der dritten Zone, $D_I$ den Durchmesser der Statorbohrung in der axial inneren, ersten Zone, und $D_{eff}$ den oben definierten wirksamen Stator-Wicklungsdurchmesser. Die Leiter-Freilegungszahl $Q_D$ ist somit zu deuten als die Durchmesservergrösserung der Statorbohrung von der ersten Zone zu einer axialen Position der dritten Zone, im Verhältnis zur Überdeckung der Leiterstäbe in der ersten Zone des Stators. Erfindungsgemäss wird diese Leiter-Freilegungszahl grösser als 0.5 und kleiner als 1.1, vorzugsweise im Bereich zwischen 0.9 und 1.05 gewählt. Eine Wahl der Leiter-Freilegungszahl nahe 1 ist insbesondere bei sehr beengten Platzverhältnissen zu bevorzugen, da dieser Wert einerseits einen grossen radialen Spalt und andererseits eine gute Überdeckung der Leiterstäbe gewährleistet.

Gegenüber dem Stand der Technik mit der kontinuierlichen Erweiterung des Durchmessers der Statorbohrung bietet die erfindungsgemässe Ausführung des Endbereiches der Statorbohrung den weiteren Vorteil, dass eine geringere Anzahl unterschiedlich gefertigter Statorblechvarianten benötigt werden.

Weiterhin schliesst in einer bevorzugten Ausführungsform der Erfindung eine vierte Zone mit konischem, sich zur Stirnseite hin erweiterndem Durchmesserverlauf den Statorblechkörper axial ab. In weiterer Verbindung mit einer Aluminium-Pressplatte resultiert eine vorteilhafte Gestaltung des Blechkörpers im Hinblick auf axial verlaufende Magnetfeldlinien.

Weitere bevorzugte und vorteilhafte Ausführungsformen ergeben sich aus den Unteransprüchen.

## Kurze Beschreibung der Zeichnung

Die Erfindung wird nachfolgend anhand eines in der Zeichnung dargestellten Ausführungsbeispiels näher erläutert. Im Einzelnen zeigen

    Fig. 1 eine elektrische Maschine mit einer Statorbohrung, deren Endbereiche nach dem Stand der Technik ausgeführt sind;

Fig. 2 eine elektrische Maschine, bei der die Endbereiche der Statorbohrung erfindungsgemäss ausgeführt sind;

Fig. 3 einen Querschnitt des Stators der in Fig. 2 dargestellten Maschine;

Fig. 4 eine Detaildarstellung der Maschine aus Fig. 2, bei der die wesentlichen Merkmale der Erfindung deutlich hervorgehoben sind.

Die Zeichnung und die nachfolgenden Ausführungen sind instruktiv zu verstehen, und sollen ein vertieftes Verständnis der Erfindungsidee gewährleisten. Hingegen sollen diese Ausführungsbeispiele nicht zu einer Einschränkung der allein in den Ansprüchen gekennzeichneten Erfindung herangezogen werden, die dem interessierten Fachmann ein deutlich breiteres Spektrum an Ausführungsformen offenbart, als in diesem Rahmen dargestellt werden kann.

**Weg zur Ausführung der Erfindung**

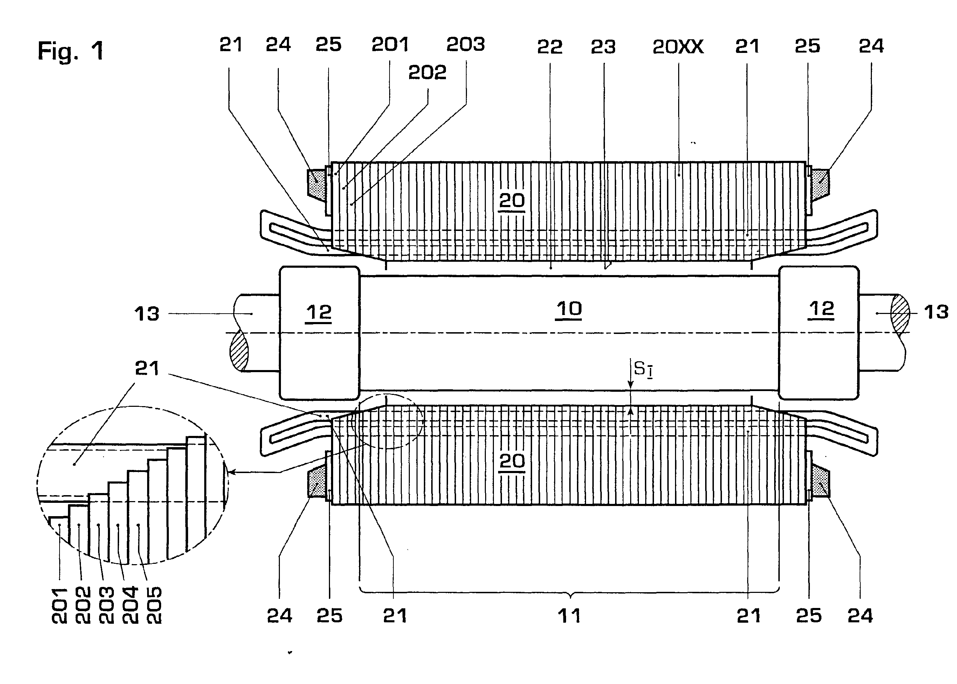

In Fig. 1 ist zunächst ein Stand der Technik dargestellt, damit die wesentlichen Merkmale der Erfindung und deren vorteilhafte Wirkung einer vollumfassenden Würdigung zugänglich werden. Eine elektrische Maschine, im Beispiel ein Generator, besteht aus einem Rotor 10 und einem Stator 20. Der Stator besteht aus einer Anzahl in axialer Richtung aneinandergefügten gegeneinander isolierten Blechen 201, 202, 203, 204, 205, ... , 20xx, .... Dadurch werden nur vergleichsweise geringe Wirbelstromstärken in dem Stator hervorgerufen. Die Statorbleche werden auf an sich bekannte Weise durch in Stirnbereichen des Stators angeordnete Pressplatten kraftschlüssig zusammengehalten. In diesem Ausführungsbeispiel sind stirnseitig Aluminium-Pressplatten 24 angeordnet, die beispielsweise mittels hier nicht dargestellter Zuganker in axialer Richtung zusammengezogen werden, und über Pressfinger 25 aus nicht-ferromagnetischem Werkstoff auf die Statorbleche wirken. Diese Bauweise ist für luftgekühlte Generatoren aus der ABB Technik 1/96, S. 20 ff bekannt; dem Fachmann sind selbstverständlich weitere Ausführungsformen der Pressplatten geläufig. Zentrisch im Stator 20 befindet sich eine Statorbohrung 23, in die der Rotor 10 eingesetzt ist. Der Rotor bildet mit dem Stator einen Luftspalt 22 mit dem radialen Luftspaltmass $s_l$ aus. Mittels des radialen Luftspaltmasses kann das Betriebsverhalten einer elektrischen Maschine beeinflusst werden. Andererseits erfordert die mechanische Handhabbarkeit des Rotors beim Ein- und Ausbau ein bestimmtes Mindestmass des radialen Luftspaltes, das gewährleistet werden muss. Im Stator 20 sind hier nicht sichtbare, aber dem Fachmann geläufige und unten noch diskutierte in einer axialen Hauptrichtung verlaufende Nuten eingebracht, in denen Leiterstäbe 21 der Statorwicklung eingelegt sind. Die Leiterstäbe sind dem Fachmann ohne weiteres geläufige Roebelstäbe. Diese Leiterstäbe sind in tangentialer Richtung von Statorzähnen überdeckt, die insbesondere radial verlaufende Magnetfelder von den Leiterstäben abhalten; dies ist ebenfalls nicht in dieser Weise expliziert, dem Fachmann aber geläufig. Auf eine explizite Darstellung wird daher an dieser Stelle verzichtet. Die Geometrie der Leiterstäbe ist auf in Umfangsrichtung verlaufende Magnetfelder optimiert. Der Rotor 10 selbst besteht aus einem Rotorballen 11, welcher den eigentlichen Aktivteil des Rotors darstellt und die Rotorwicklungen trägt. Stirnseitig überdecken Rotorkappen 12, deren Aussendurchmesser grösser ist, als der des Rotorballen, den Rotorballen. Aufgabe der Rotorkappen ist unter anderem die Fixierung der Endbereiche der Rotorwicklung. Die Rotorkappen sind axial auf die Enden des Rotorballens aufgesetzt. Von dort weg nimmt das Rotor-Magnetfeld in axialer Richtung schnell ab. Die Wellenzapfen 13 des Rotors tragen auf an sich bekannte Art in der Figur nicht dargestellte Lagerstellen und Antriebsflansche. In Endbereichen erweitert sich die Statorbohrung zur jeweiligen Stirnseite des Generators hin. Dies ist notwendig, um das radiale Mindestmass des Luftspaltes auch im Bereich der Rotorkappen aufrechtzuerhalten, ohne das Luftspaltmass $s_l$ im Inneren des Generators zu vergrössern. Bei der Erweiterung der Statorbohrung muss berücksichtigt werden, dass diese eine radiale Stufung der Statorbleche bedingt, was in dem vergrösserten Ausschnitt in der Figur dargestellt ist. Bedingt durch diese radiale Abstufung können axiale Magnetfelder Wirbelströme in den Blechen generieren, und zwar umso stärker, je grösser die radiale Stufe ist. Dies ist natürlich umso kritischer, je grösser die Magnetfeldstärken sind, also je näher eine Stufe zum Inneren des Generators angeordnet ist. Bei den aus der Praxis bekannten Ausführungsformen ist eine lineare treppenartige Abstufung der Statorbleche gewählt. Die Ausführungsform, die in der SU 1185498 angegeben ist, weist eine zur Stirnseite hin progressive Stufung auf. Hierdurch wird die tangentiale Überdeckung der Leiterstäbe 21 durch die Zähne der Statorbleche bereits nahe am Aktivteil und sogar noch im axialen Bereich des Rotorballens 11, also im Aktivteil der elektrischen Maschine, vermindert. Die Leiterstäbe sind in der Folge starken radialen Magnetfeldern ausgesetzt, für die sie nicht ausgelegt sind. Dadurch werden in den axialen Endbereichen der Statorwicklung starke Wirbelströme in den Leiterstäben induziert. Dies ist beispielsweise bei direkt wassergekühlten Wicklungen durchweg beherrschbar, da durch die Wasserkühlung die entstehende thermische Verlustleistung effizient aus den Leiterstäben abgeführt wird. Bei Generatoren hingegen, bei denen die an sich sehr einfach zu implementierende und preisgünstige indirekte Kühlung der Wicklungen durch Luft genutzt wird, können an den angesprochenen Stellen der Leiterstäbe starke lokale Temperaturerhöhungen auftreten, wobei eine Intensivierung der Kühlung an sich kaum sinnvoll realisierbar ist.

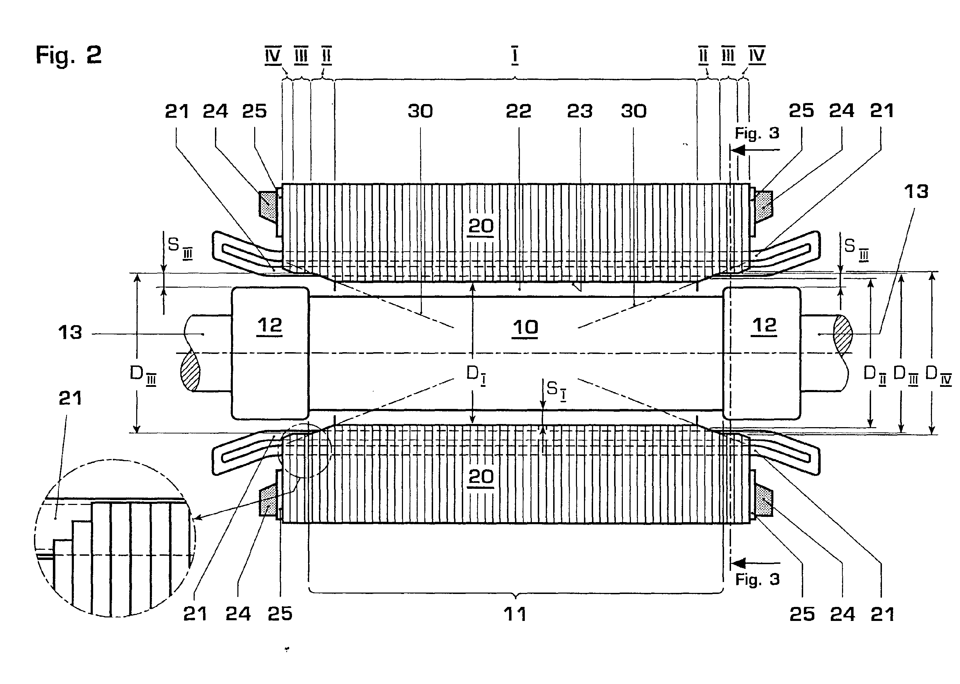

Fig. 2 zeigt eine erfindungsgemäss ausgeführte elektrische Maschine. Die Maschine ist prinzipiell vollkommen analog zu der in Fig. 1 gezeigten Maschine aufgebaut. Der Stator 20 besteht auf analoge Weise aus axial aneinandergefügten Statorblechen 20xx die von Pressplatten 24 und Pressfingern 25 zusammengehalten werden. In eine zentrale Statorbohrung 23 ist ein vollkommen identisch wie in Fig. 1 aufgebauter Rotor eingesetzt. Unterschiede finden sich in der Ausgestaltung der Statorbohrung. Zu jeder Stirnseite des Stators hin gliedert sich die Statorbohrung in vier Zonen. Eine axial innere erste Zone I weist einen konstanten Bohrungsdurchmesser $D_I$ auf. Dieser entspricht dem Statorbohrungs-Nenndurchmesser. Daran schliesst sich eine zweite Zone II mit sich axial zur Stirnseite des Generators hin vergrösserndem Bohrungsdurchmesser $D_{II}$ an, in welcher der Durchmesser der Statorbohrung zur Zone III mit dem Bohrungsdurchmesser $D_{III}$ zunimmt. Der Öffnungswinkel ist dabei in erster Linie durch die Forderung begrenzt, die radialen Stufen der Statorbleche zu begrenzen, da ansonsten axial verlaufende Magnetfelder starke Wirbelströme in den Statorblechen induzieren. Jedoch folgt der Innendurchmesserverlauf der herkömmlichen Konturlinie 30 nur, bis das notwendige radiale Luftspaltmass zwischen dem Stator und einer Rotorkappe 12 gewährleistet ist. Der Bohrungsdurchmesser in der Zone III ist wenigstens näherungsweise konstant, die Statorbohrung in der Zone III ist also zumindest näherungsweise zylindrisch.

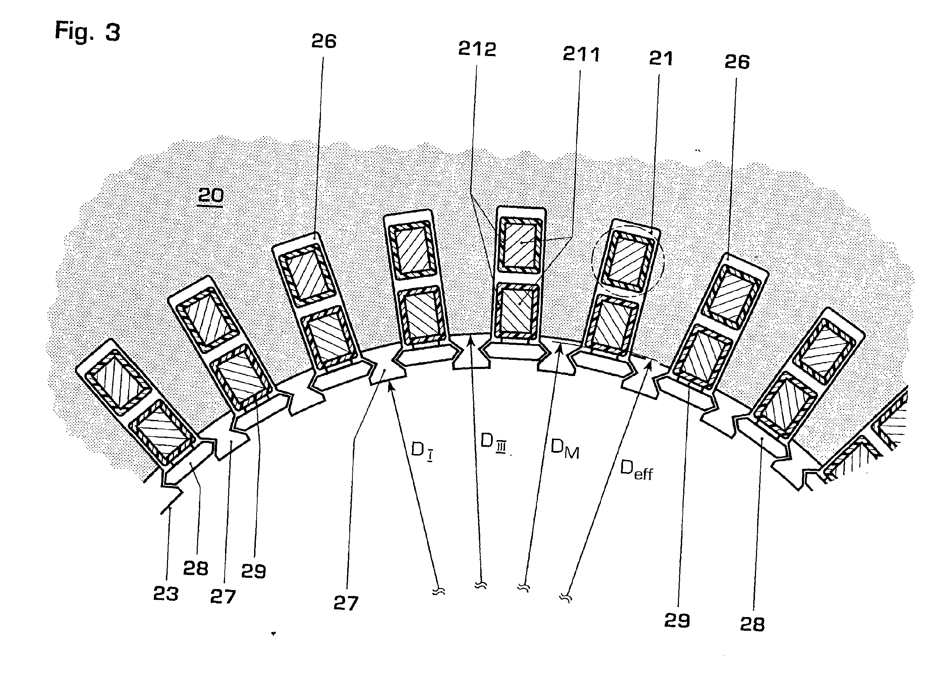

Die erfindungsrelevanten Kriterien für die Dimensionierung des Durchmessers $D_{III}$ werden unter Einbezug der Fig. 3, welche einen Querschnitt des Stators der Maschine aus Fig. 2 darstellt, besser verstanden. In dieser Figur sind die oben erwähnten wesentlich axial verlaufenden Nuten 26 des Stators zu erkennen. Die Statornuten 26 werden in Umfangsrichtung von Statorzähnen 27 begrenzt. Die Köpfe der Statorzähne definieren die Statorbohrung 23 des Stators 20. In den Statornuten 26, zwischen den Statorzähnen 27, sind als dem Fachmann ohne weiters geläufige Roebelstäbe ausgeführte Leiterstäbe 21 der Statorwicklung angeordnet, die durch Nutverschlusskeile 28 und Keilunterlagen 29 in den Nuten fixiert sind. Innerhalb der Statornuten sind die Leiterstäbe 21 so angeordnet, dass sie von einem Kühlmittel, beispielsweise Luft, umströmbar sind. Die Leiterstäbe 21 bestehen aus einem Leitermaterial 211, beispielsweise Kupfer, welches von einer Isolierung 212 umgeben ist. Dabei definiert eine radial innere Begrenzung der Isolierung einen mechanischen Stator-Wicklungsdurchmesser $D_M$, und eine radial innere Begrenzung des Leitermaterials definiert einen wirksamen Stator-Wicklungsdurchmesser $D_{eff}$. Der Innendurchmesser $D_I$ der Statorbohrung in der ersten Zone ist kleiner als der mechanische Stator-Wicklungsdurchmesser, woraus sich eine vollständige Überdeckung der Leiterstäbe durch die Statorzähne in Umfangsrichtung ergibt. Dabei ist der Durchmesser der Statorbohrung in der axial inneren Zone I so bemessen, dass sich zwischen dem Stator-Blechkörper und dem nur im Längsschnitt in Fig. 2 dargestellten Rotorballen 11 eine radiales Luftspaltmass $s_I$ einstellt, wie es in Fig. 2 angegeben ist. In der dritten Zone III stellt sich zwischen einer Rotorkappe 12 und dem Blechkörper des radiale Mass $s_{III}$ ein, das grösser als oder wenigstens gleich gross wie ein aus Gründen der mechanischen Handhabbarkeit erforderliches Mindestmass sein muss. Diese Bedingung ist wohl auch bei einer Ausführung entsprechend dem in Fig. 1 dargestellten Stand der Technik erfüllt; der Durchmesser der Statorbohrung nach dem Stand der Technik folgt aber auch in der dritten Zone der generellen Konturlinie 30. Damit steigt der Durchmesser $D_{III}$ der Statorbohrung in der dritten Zone schnell wesentlich über den wirksamen Wicklungsdurchmesser an. Leiterstäbe werden freigelegt, und aufgrund an der Grenze des Aktivbereiches noch starker radialer Magnetfelder werden in den Leiterstäben Wirbelstromverluste generiert. Bei der vorliegenden Erfindung sind die Leiterstäbe, zumindest deren Leitermaterial, in der Zone III vollständig oder zumindest grösstenteils von Statorzähnen überdeckt und somit wirkungsvoll von angreifenden radialen Magnetfeldern abgeschirmt. Die detaillierte Dimensionierung des Durchmessers $D_{III}$ bei der erfindungsgemässen Ausführung der Endbereiche eine Statorbohrung hängt in hohem Masse von der speziellen Geometrie eines Generators ab. Eine bevorzugte Möglichkeit, gerade bei beengten Platzverhältnissen einerseits die Überdeckung der Leiterstäbe zu gewährleisten, andererseits aber den radialen Abstand zwischen der Rotorkappe und dem Stator in der Zone 3 sicherzustellen, ist im Ausführungsbeispiel dargestellt. In Fig. 3 zu erkennen, ist der Bohrungsdurchmesser $D_{III}$ in der Zone III so gewählt, dass er im wesentlichen dem wirksamen Stator-Wicklungsdurchmesser entspricht, und eher etwas kleiner als dieser gewählt wird. Bei der hier dargestellten Maschine liegt der Bohrungsdurchmesser $D_{III}$ der dritten Zone zwischen dem wirksamen Stator-Wicklungsdurchmesser $D_{eff}$ und dem mechanischen Stator-Wicklungsdurchmesser $D_M$. Erfindungswesentlich ist dabei in erster Linie, dass in der gesamten dritten Zone, mithin also in dem Bereich, der die Rotorkappe umgibt und unmittelbar dem Aktivteil benachbart ist, im Gegensatz zu dem in Fig. 1 dargestellten Stand der Technik, der kleinste zu Gewährleistung der mechanischen Handhabbarkeit erforderliche Bohrungsdurchmesser im Bereich der Rotorkappe gewählt werden kann, woraus eine gegenüber dem Stand der Technik vergrösserte Überdeckung der Leiterstäbe und damit geringe Wirbelstromverluste resultieren.

Beim Ausführungsbeispiel in Fig. 2 schliesst sich axial zur Stirnseite des Stators hin eine vierte Zone IV an die Zone III an. Der Durchmesser $D_{IV}$ der Statorbohrung nimmt in der vierten Zone zur Stirnseite des Stators hin wieder zu. Dies gewährleistet in Verbindung mit den Aluminium-Pressplatten 24 und den Pressfingern 25 einen günstigen Abschluss des Stators bezüglich axial verlaufender Magnetfelder.

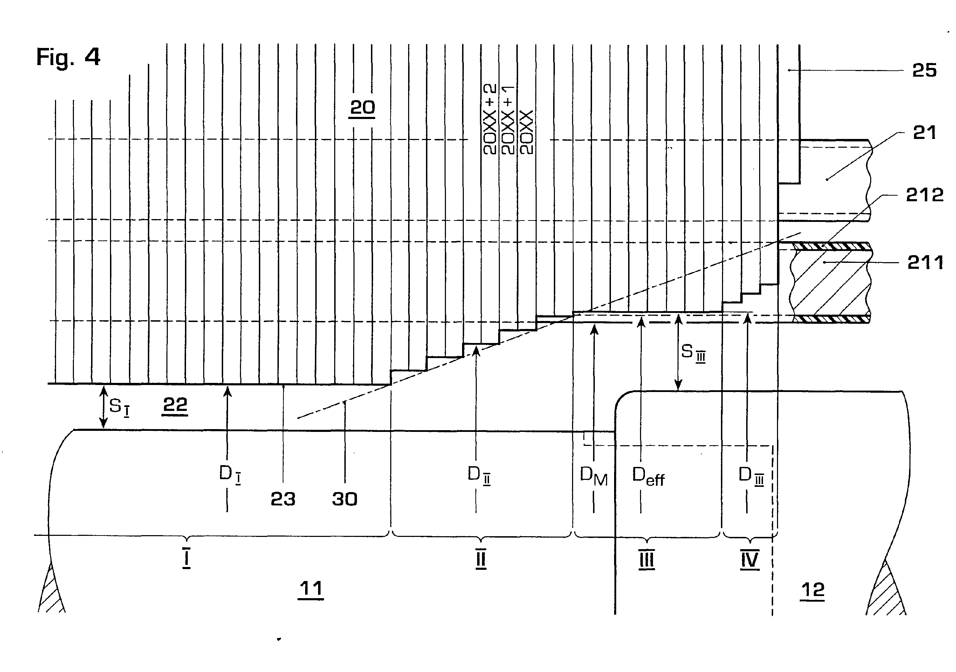

In Fig. 4 ist der erfindungsgemäss ausgeführte Statorbohrungs-Endbereich aus Fig. 2 vergrössert dargestellt. Der Stator 20 besteht aus einzelnen in axialer Richtung aneinandergefügten Statorblechen 20xx. Innerhalb von in dieser Ansicht nicht sichtbaren und dargestellten Statornuten sind Leiterstäbe 21 der Statorwicklung angeordnet. In einem Mittelteil der elektrischen Maschine, in der ersten Zone I mit dem Durchmesser $D_I$, besteht zwischen dem Rotorballen 11 und dem Stator 20 ein radiales Mass $s_I$. In einem axialen Endbereich muss die zentrale Bohrung des Stator, in welcher der Rotor eingebaut ist, einen steigenden Durchmesser aufweisen, um ein erforderliches Mindestmass des Luftspaltes auch im Bereich einer Rotorkappe 12 zu gewährleisten, deren Aussendurchmesser grösser ist als der Aussendurchmesser des Rotorballen 11. In der Figur ist eine Konturlinie 30 eingezeichnet, welcher die Kontur der Statorbohrung nach dem Stand der Technik folgt. Wie zu erkennen ist, würden bei dieser Kontur die Leiterstäbe 21 der Statorwicklung im Bereich des Kappensitzes freigelegt und starken radialen Magnetfeldern ausgesetzt, mit den oben diskutierten und an sich unerwünschten Folgen. Gemäss der Erfindung wird die Statorbohrung in einem Endbereich in mehrere Zonen I, II, III, IV mit unterschiedlichem Durchmesserverlauf unterteilt. Dabei wechselt sich jeweils eine Zone I, III mit wenigstens annähernd konstantem Innendurchmesser $D_I$, $D_{III}$ der Statorbohrung mit einer Zone II, IV mit zur Stirnseite stärker zunehmendem Bohrungsdurchmesser $D_{II}$, $D_{IV}$ ab. Eine erste Zone I weist einen konstanten Innendurchmesser $D_I$ auf. Daran schliesst sich eine Zone II an, in welcher der Durchmesser $D_{II}$ der Statorbohrung zunimmt. Die Bohrung ist in diesem Bereich im Beispiel konisch gestaltet, und ihre Kontur folgt im wesentlichen der generellen Konturlinie 30. Der generell betrachtet konische Verlauf ist realisiert, indem zur Stirnseite hin Statorbleche mit grösserem Innendurchmesser aneinandergefügt werden. Dadurch entsteht eine detailliert betrachtet treppenförmige Kontur; in diesem Zusammenhang wird auch von einer Endabtreppung einer Statorbohrung einer elektrischen Maschine gesprochen. Erfindungsgemäss wird die Abtreppung der Zone II nicht bis zur Stirnseite des Stators in dieser Art weitergeführt, sondern nur soweit, dass der Bohrungsdurchmesser der Statorbohrung in einem axial weiter zu Stirnseite hin gelegenen Bereich gross genug ist, um auch im Bereich der Rotorkappe 12 ein erforderliches radiales Mindestmass des Luftspaltes zu gewährleisten. Daher schliesst sich axial zur Stirnseite hin an die Zone II, welche einen konischen Verlauf der Statorbohrung aufweist, eine Zone III an, in welcher der Durchmesser $D_{III}$ der Statorbohrung im Wesentlichen konstant ist, und in welcher Zone die Statorbohrung eine zumindest näherungsweise zylindrische Kontur aufweist. In dieser Zone sind die Leiterstäbe der Statorwicklung erfindungsgemäss noch vollständig oder zumindest grösstenteils von Statorzähnen überdeckt, wodurch die Leiterstäbe wirkungsvoll von radialen Magnetfeldern abgeschirmt werden. In dem hier dargestellten Beispiel liegt der Durchmesser $D_{III}$ der Statorbohrung der Zone III zwischen dem durch die Isolierung 212 eines Leiterstabes 21 definierten mechanischen Stator-Wicklungsdurchmesser $D_M$ und dem durch das Leitermaterial 211 des Leiterstabes definierten wirksamen Stator-Wicklungsdurchmesser. Hieraus resultiert im Ausführungsbeispiel eine vollständige Überdeckung zumindest des Leitermaterials 211 der Statorwicklung 21 durch Statorzähne, wie es in Verbindung mit Fig. 3 diskutiert wurde. Wie oben bereits beschrieben, werden hierdurch Wirbelströme und daraus resultierende unerwünschte lokale Erwärmungen der Statorwicklung vermieden. An die Zone III schliesst sich schliesslich eine den Stator stirnseitig abschliessende Zone IV an, in welcher der Bohrungsdurchmesser wieder zunimmt. Diese abschliessende Abtreppung vermeidet, einzelne Statorbleche mit starken axialen Magnetfeldern zu beaufschlagen. In der Zone IV nimmt die Überdeckung der Leiterstäbe durch die Statorzähne schnell ab. Jedoch ist die Zone IV kurz, so, dass lokal auftretende Erwärmungen durch axiale Wärmeleitung leicht abgeführt werden können. Axial ganz aussen am Stator ist ein Pressfinger 25 zu erkennen; die Pressplatte 24 ist in dieser Figur nicht dargestellt.

Die erfindungsgemässe Ausführung der Endbereiche von Statorbohrungen elektrischer Maschinen bietet darüberhinaus noch eine Reihe weiterer Vorteile. So ist die Anzahl unterschiedlicher Varianten von Statorblechen bei erfindungsgemässer Ausführung deutlich geringer als bei einer Ausführung nach dem in Fig. 1 dargestellten Stand der Technik. Es erweist sich je nach Auslegung der Kühlung auch als vorteilhaft, dass bei der erfindungsgemässen Ausführung wie in den Figuren 2 bis 4 dargestellt im Bereich der Zone III eine Blende für Kühlluft zwischen dem Stator und der Rotorkappe ausgebildet wird.

Im Lichte der vorangehend gemachten Erläuterungen der Erfindung mit den Ausführungsbeispielen und den primär angestrebten Zielen der Erfindung werden sich dem Fachmann weitere vorteilhafte Wirkungen und nicht im Beispiel dargestellte spezielle Ausführungsformen der in den Ansprüchen gekennzeichneten Erfindung ohne Weiteres offenbaren.

**Bezugszeichenliste**

| | |
|---|---|
| 10 | Rotor |
| 11 | Rotorballen |
| 12 | Rotorkappe |
| 13 | Wellenzapfen |
| 20 | Stator |
| 21 | Leiterstab (Roebelstab) einer Statorwicklung |
| 22 | Luftspalt |

| | |
|---|---|
| 23 | Statorbohrung |
| 24 | Pressplatte |
| 25 | Pressfinger |
| 26 | Statornut |
| 27 | Statorzahn |
| 28 | Nutverschlusskeil |
| 29 | Keilunterlage |
| 30 | generelle Konturlinie |
| 201 | Statorblech |
| 202 | Statorblech |
| 203 | Statorblech |
| 204 | Statorblech |
| 205 | Statorblech |
| 20xx | Statorblech |
| 211 | Leitermaterial der Statorwicklung |
| 212 | Isolierung der Statorwicklung |
| I | erste Zone der Statorbohrung |
| II | zweite Zone der Statorbohrung |
| III | dritte Zone der Statorbohrung |
| IV | vierte Zone der Statorbohrung |
| $s_I$ | radiales Luftspaltmass im Aktivteil des Generators |
| $S_{III}$ | radiales Spaltmass zwischen Rotorkappe und Stator |
| $D_I$ | Durchmesser der Statorbohrung im Mittelteil des Stators |
| $D_{III}$ | Durchmesser der Statorbohrung im Bereich der Rotorkappe |
| $D_{eff}$ | wirksamer Stator-Wicklungsdurchmesser |
| DM | mechanischer Stator-Wicklungsdurchmesser |
| QD | Leiter-Freilegungszahl |

**Patentansprüche**

1. Elektrische Maschine mit einem Rotor (10) und einem Stator (20), wobei der Rotor in eine zentrale Statorbohrung (23) des Stators (20) eingesetzt ist, und wobei

    - an einer die Statorbohrung (23) begrenzenden inneren Mantelfläche des Stators im Wesentlichen axial verlaufende Statornuten (26) angeordnet sind;
    - die Statornuten (26) in Umfangsrichtung von Statorzähnen (27) begrenzt sind;
    - in diesen Statornuten (26) in Umfangsrichtung zwischen den Statorzähnen (27) Leiterstäbe (21) einer Statorwicklung angeordnet sind;
    - die Leiterstäbe (21) der Statorwicklung aus einem Leitermaterial (211) und einem dieses Leitermaterial umgebenden Isolierung (212) bestehen, wobei eine radial innere Begrenzung der Isolierung (212) einen mechanischen Stator-Wicklungsdurchmesser ($D_M$) definiert, und eine radial innere Begrenzung des Leitermaterials (211) einen wirksamen Stator-Wicklungsdurchmesser ($D_{eff}$) definiert;

    - der Rotor einen Rotorballen (11) beinhaltet, welcher Rotorballen in seiner axialen Ausdehnung im wesentlichen den Aktivteil des Generators mit im Betrieb starken Magnetfeldern definiert;
    - auf den Rotorballen (11) an axialen Enden Rotorkappen (12) aufgesetzt sind, deren Aussendurchmesser grösser ist als derjenige des Rotorballens;
    - der Stator im Aktivteil eine erste Zone (I) mit einem konstanten Durchmesser ($D_I$) der Statorbohrung aufweist, welcher Durchmesser um das Doppelte eines Luftspaltmasses ($s_I$) grösser ist als der Durchmesser des Rotorballens;
    - der Durchmesser ($D_I$) der Statorbohrung in der ersten Zone (I) kleiner ist als der wirksame Stator-Wicklungsdurchmesser ($D_{eff}$), dergestalt, dass das Leitermaterial (211) der Statorwicklung in der ersten Zone (I) in Umfangsrichtung wenigstens vollständig von Statorzähnen (27) überdeckt ist;
    - der Stator im axialen Bereich der Rotorkappe (12) eine dritte Zone (III) aufweist mit einem in axialer Richtung wenigstens annähernd konstanten Verlauf des Durchmessers ($D_{III}$) der Statorbohrung, welcher Durchmesser ($D_{III}$) um ein vorgegebenes Mindestmass ($s_{III}$) grösser ist, als der Aussendurchmesser der Rotorkappe (12) und welcher Durchmesser ($D_{III}$) grösser ist als der Durchmesser ($D_I$) der Statorbohrung in der ersten Zone (I);
    - der Stator axial zwischen der ersten Zone (I) und der dritten Zone (III) eine zweite Zone (II) mit axial zu Stirnseiten des Stators hin zunehmendem Durchmesser ($D_{II}$) der Statorbohrung aufweist:

    - der Durchmesser ($D_{III}$) der Statorbohrung in der dritten Zone (III) an keiner Stelle wesentlich grösser als der wirksame Stator-Wicklungsdurchmesser ($D_{eff}$) ist, dergestalt, dass das Leitermaterial (211) der Statorwicklung in der dritten Zone (III) in Umfangsrichtung wenigstens zu einem überwiegenden Teil von Statorzähnen (27) überdeckt ist, und ein mechanisch erforderlicher Abstand ($s_{III}$) zwischen dem Stator in der dritten Zone (III) und der Rotorkappe (12) gewährleistet ist.

2. Elektrische Maschine nach Anspruch 1, wobei der Durchmesser ($D_{III}$) der Statorbohrung in der dritten Zone (III) so bemessen ist, dass der radiale Abstand ($s_{III}$) zwischen der Rotorkappe (12) und dem Stator in der dritten Zone das radiale Luftspaltmass ($s_I$) im Aktivteil des Generators zwischen dem Rotorballen (11) und der ersten Zone (I) der Statorbohrung an keiner Stelle wesentlich überschreitet.

**3.** Elektrische Maschine nach Anspruch 2, wobei der Durchmesser ($D_{III}$) der Statorbohrung in der dritten Zone (III) so bemessen ist, dass der radiale Abstand ($s_{III}$) zwischen der Rotorkappe (12) und dem Stator in der dritten Zone zumindest näherungsweise dem radialen Luftspaltmass ($s_I$) im Aktivteil des Generators zwischen dem Rotorballen (11) und der ersten Zone (I) der Statorbohrung entspricht.

**4.** Elektrische Maschine nach Anspruch 1, wobei der Durchmesser der Statorbohrung ($D_{III}$) in der dritten Zone (III) zwischen dem mechanischen Stator-Wicklungsdurchmesser ($D_M$) und dem wirksamen Stator-Wicklungsdurchmesser ($D_{eff}$) liegt.

**5.** Elektrische Maschine nach Anspruch 1, wobei eine Leiter-Freilegungszahl $Q_D$ grösser als 0.5 und kleiner als 1.1 ist, welche Leiter-Freilegungszahl definiert ist durch

$$Q_D = \frac{D_{III} - D_I}{D_{eff} - D_I}$$

in welcher Beziehung $D_{III}$ den Durchmesser der Statorbohrung an einer axialen Position der dritten Zone, $D_I$ den Durchmesser der Statorbohrung in der axial inneren, ersten Zone, und $D_{eff}$ den wirksamen Stator-Wicklungsdurchmesser bedeuten.

**6.** Elektrische Maschine nach Anspruch 5, wobei die Leiter-Freilegungszahl $Q_D$ grösser als 0.9 und kleiner als 1.05 ist.

**7.** Elektrische Maschine nach Anspruch 1, **dadurch gekennzeichnet, dass** die Statorwicklung eine indirekt gekühlte Wicklung ist.

**8.** Elektrische Maschine nach Anspruch 7, **dadurch gekennzeichnet, dass** die Kühlung mit Luft realisiert ist.

**9.** Elektrische Maschine nach Anspruch 1, **dadurch gekennzeichnet, dass** die elektrische Maschine ein Generator ist.

**10.** Elektrische Maschine nach Anspruch 1, wobei sich am Stator axial ausserhalb der dritten Zone (III) eine vierte Zone (IV) anschliesst mit zu einer Stirnseite des Stator hin sich vergrösserndem Durchmesser ($D_{IV}$) der Statorbohrung.

Fig. 1

Fig. 2

Fig. 3

Fig. 4

25

20

21

20XX+2
20XX+1
20XX

212

211

$S_{\bar{I}}$   22

$S_{\overline{III}}$

$D_{\bar{I}}$

$D_{\overline{II}}$

$D_M$   $D_{eff}$

$D_{\overline{III}}$

23   30

$\bar{I}$

$\overline{II}$

$\overline{III}$   $\overline{IV}$

11

12

EP 1 134 873 A2